# EUROPÄISCHE PATENTSCHRIFT

(11) **EP 2 042 791 B1**
(45) Veröffentlichungstag und Bekanntmachung des Hinweises auf die Patenterteilung: **16.06.2010**
(21) Anmeldenummer: 07018883.4
(22) Anmeldetag: 26.09.2007
(51) Int. Cl.: F16K 27/00

(54) **Seitenventil**
Lateral valve
Soupape latérale

(43) Veröffentlichungstag der Anmeldung: 01.04.2009
(73) Patentinhaber: Flühs Drehtechnik GmbH, D-58515 Lüdenscheid (DE)
(72) Erfinder: Lange, Lutz, 58511 Lüdenscheid (DE)
(74) Vertreter: Kötter, Ulrich

(56) Entgegenhaltungen:
- DE-U1- 20 106 217
- DE-U1- 20 219 008
- US-A- 5 901 735

## Beschreibung

Die Erfindung betrifft ein Seitenventil nach dem Oberbegriff des Patentanspruchs 1, wie es beispielsweise aus der US-A-5901735 bekannt ist.

Mit Hilfe von Seitenventilen wird der Austritt von Medien aus Armaturen mit gleichzeitiger Umlenkung der Fließrichtung gesteuert. Bekannte Seitenventile umfassen eine Außenhülse, in die seitlich ein Anschlussstutzen eingebracht ist, sowie eine Innenhülse, welche längs in die Außenhülse eingebracht ist, so dass zwischen Innenhülse und Außenhülse ein Zwischenraum gebildet ist. Die Innenhülse nimmt ein Ventiloberteil auf, über das die Zuflussmenge steuerbar ist. Die Innenhülse sowie der Anschlussstutzen sind unter Einsatz eines dichtenden Klebers mit der Außenhülse verschraubt, wobei der dichtende Kleber vor dem Einschraubvorgang auf dem Gewindebereich aufgebracht wird. Zur zusätzlichen Abdichtung ist oftmals an der nach außen gerichteten Seite des Einschraubgewindes der Innenhülse ein O-Ring zur zusätzlichen Abdichtung vorgesehen, Die Abdichtung des Anschlussstutzens erfolgt ausschließlich über den vorgenannten dichtenden Kleber.

Nachteilig an den vorbekannten Außenventilen ist, dass das durchströmende Medium mit dem Klebstoff in Berührung kommt. Insbesondere im Bereich der Trinkwasserversorgung sind derartige Kontakte mit Klebstoffen länderspezifisch unterschiedlichen Restriktionen unterworfen. Daher müssen je nach länderspezifischen Anforderungen unterschiedliche Kleber zum Einsatz kommen. In manchen Ländern ist sogar abzusehen, dass derartige Kontakte mit Klebstoffen zukünftig untersagt werden.

Hier will die Erfindung Abhilfe schaffen. Der Erfindung liegt die Aufgabe zu Grunde, ein Seitenventil der vorgenannten Art zu schaffen, bei dem ein Kontakt des durchströmenden Mediums mit dem abdichtenden Klebstoff ausgeschlossen ist. Gemäß der Erfindung wird diese Aufgabe durch die Merkmale des Patentanspruchs 1 gelöst.

Mit der Erfindung ist ein Seitenventil geschaffen, bei dem der Kontakt des durchströmenden Mediums mit dem abdichtenden Klebstoff ausgeschlossen ist. Durch das Vorsehen eines Dichtungsrings benachbart zu dem Befestigungsabschnitt an seiner dem Anschlussstück abgewandten Seite ist der Kontakt des durchströmenden Mediums mit dem mit dichtendem Klebstoff versehenen Einschraubgewindebereich vermieden. Unter dem Begriff Befestigungsabschnitt ist hier der Bereich zu verstehen, in dem die Verbindung zwischen Außenhülse und Innenhülse gebildet'ist. Bei einer Schraubverbindung ist dies beispielsweise der Bereich, in dem die Gewinde im Eingriff sind, bei einer Pressverbindung der Kontaktbereich der Presspassung. Gleichermaßen kann der Befestigungsabschnitt auch durch eine Bördelung gebildet sein.

Durch das Vorsehen eines Dichtungsrings an einer am Grund der zur Aufnahme des Anschlussstutzens seitlich in der Außenhülse angeordneten Öffnung vorgesehenen Auflage ist der Kontakt des durchströmenden Mediums mit dem mit dichtendem Klebstoff versehenen Verbindungsbereich zwischen Außenhülse und Anschlussstutzen vermieden.

In Weiterbildung der Erfindung überragt die Innenhülse im montierten Zustand die Außenhülse. Hierdurch ist der Einsatz von Ventiloberteilen kürzerer Ausführungen ermöglicht.

In Ausgestaltung der Erfindung weist der Anschlussstutzen ein Einschraubgewinde auf, mittels dessen er in ein seitlich in die Außenhülse eingebrachtes Innengewinde einschraubbar ist. Eine derartige Schraubverbindung weist den Vorteil auf, dass sie im Gegensatz beispielsweise zu einer Pressverbindung bei der Montage innerhalb von Toleranzgrenzen korrigierbar ist.

In weiterer Ausgestaltung der Erfindung ist der Anschlussstutzen an seinem in die Außenhülse einschraubbaren Ende konusförmig ausgebildet, so dass im eingeschraubten Zustand zwischen der Auflage und dem konusförmigen Ende eine Aufnahme für einen Dichtungsring gebildet ist. Durch die konusförmige Ausbildung wird während des Einschraubvorgangs eine zunehmende Kompression des zuvor an der Auflage unter Vorspannung eingebrachten Dichtungsrings bewirkt, wodurch eine gute Dichtwirkung erzielt wird.

In Weiterbildung der Erfindung ist an der Außenhülse im Bereich des Anschlussstutzens eine umlaufende Wulst angeordnet. Hierdurch ist der Querschnitt der Außenhülse in diesem Bereich vergrößert, wodurch trotzt Vorsehen eines Dicht tungsrings ein ausreichend dimensioniertes Gewinde realisierbar ist.

Vorteilhaft ist in die Außenhülse ein Innengewinde zum Einschrauben eines Ventiloberteils eingebracht. Hierdurch ist eine einfache Montage eines Ventiloberteils in die Außenhülse ermöglicht.

Andere Weiterbildungen und Ausgestaltungen der Erfindung sind in den übrigen , Unteransprüchen angegeben. Ein Ausführungsbeispiel der Erfindung ist in den Zeichnungen dargestellt und wird nachfolgend im Einzelnen beschrieben. Es zeigen:

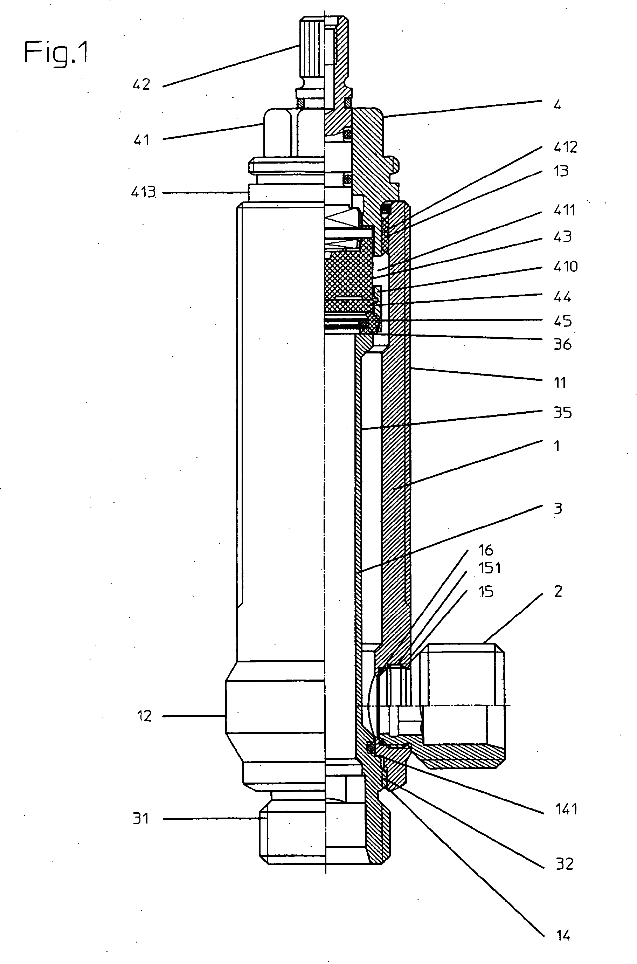

- Figur 1: ein Seitenventil in Teilschnittdarstellung;

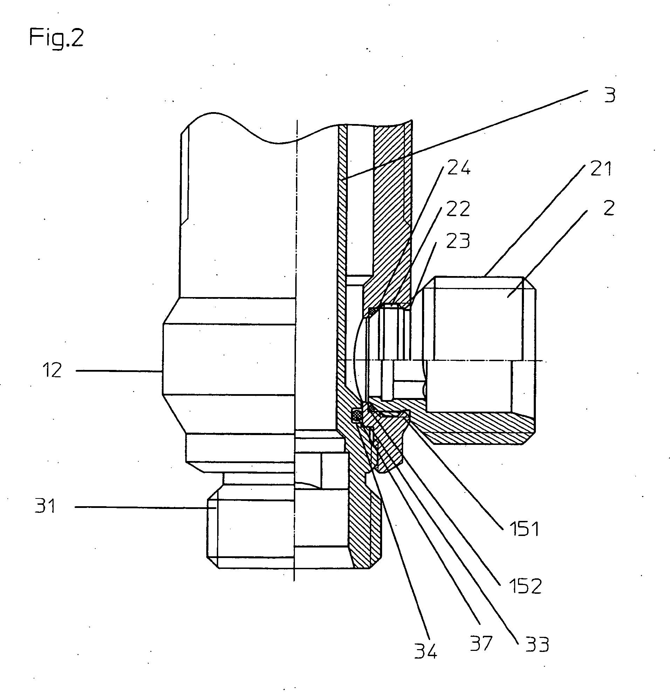

- Figur 2: die Detailansicht des Einschraubbereichs von Innenhülse und Anschlussstutzen des Seitenventils aus Figur 1 und

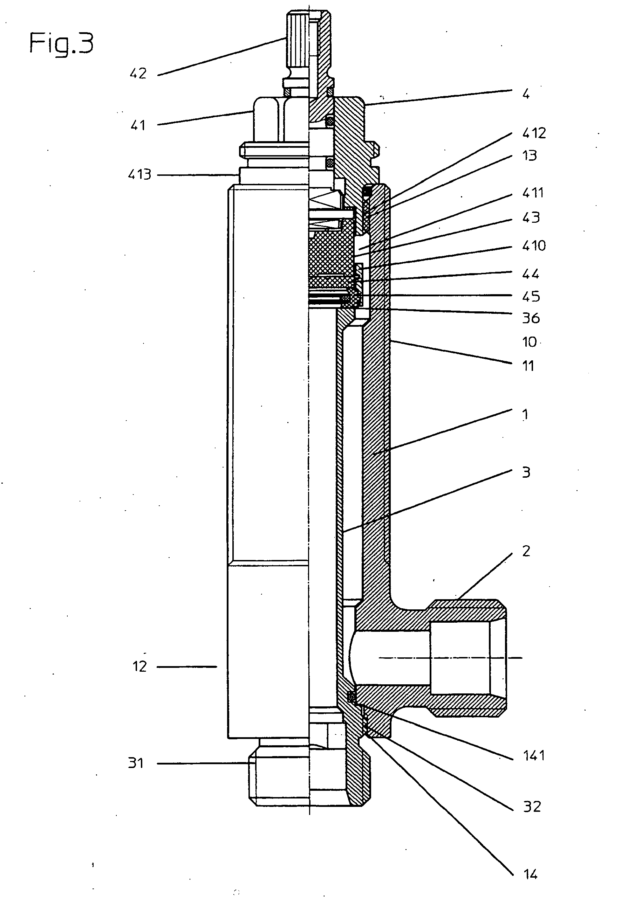

- Figur 3: die Darstellung eines Seitenventils in einer weiteren Ausführungsform mit angeformten Anschlussstutzen im Teilschnitt.

Das als Ausführungsbeispiel gewählte Seitenventil besteht im Wesentlichen aus einer Außenhülse 1, einem Anschlussstutzen 2, einer Innenhülse 3 sowie einem Ventiloberteil 4.

Die Außenhülse 1 ist im Ausführungsbeispiel aus Messing hergestellt und im Wesentlichen hohlzylindrisch ausgebildet. Über etwa 2/3 der Länge der Außenhülse 1 ist in diese ein Außengewinde 11 eingebracht. Beabstandet zu dem Außengewinde 11 ist an die Außenhülse 1 umlaufend eine Wulst 12 angeformt. Die Wulst 12 ist derart ausgebildet, dass sie in einen ebenen umlaufenden Ring mündet, wodurch eine gute Auflage für den Anschlussstutzen 2 erzielt ist. In die Wulst 12 ist orthogonal zu dieser eine kreisrunde Ausnehmung 15 eingebracht, welche mit einem Innengewinde 151 versehen ist. Am Grund des Innengewindes 151 ist eine Auflage 152 für einen Dichtungsring vorgesehen. An ihrem der Wulst 12 zugewandten Ende ist in die Außenhülse 1 weiterhin ein Innengewinde 14 eingebracht, an dessen Grund ein Anschlag 141 angeordnet ist. Weiterhin ist an dem der Wulst 12 abgewandten Ende auf der Innenseite der Außenhülse 1 ein Innengewinde 13 zur Befestigung eines Ventiloberteils 4 eingebracht.

Der Anschlussstutzen 2 ist im Ausführungsbeispiel aus Messing hergestellt und im Wesentlichen hohlzylindrisch ausgeführt. In seine äußere Mantelfläche sind umlaufend beabstandet zueinander ein Anschlussgewinde 21 sowie ein Einschraubgewinde 22 eingebracht. Zwischen dem Anschlussgewinde 21 und dem im Durchmesser kleiner ausgeführten Einschraubgewinde 22 ist ein Anschlag 23 in Form eines umlaufenden Steges angeformt. An seinem dem Einschraubgewinde 22 zugewandten Ende ist in den Anschlussstutzen 2 ein umlaufender Außenkonus 24 angeformt.

Die Innenhülse 3 ist ebenfalls als weitgehend hohlzylindrisches Messingdrehteil ausgeführt. An einem Ende ist in die Innenhülse 3 umlaufend ein Anschlussgewinde 31 eingebracht. Beabstandet zu dem Anschlussgewinde 31 ist weiterhin ein im Durchmesser vermindertes Einschraubgewinde 32 angeordnet. An das Einschraubgewinde 32 schließt sich ein Anschlag 33 an, der als umlaufender Steg ausgebildet ist, an den sich wiederum eine umlaufende Nut 34 zur Aufnahme eines Dichtungsrings anschließt. An die Nut 34 grenzt über einen konisch ausgeformten Übergang ein verjüngter Abschnitt 35 an, der in einen umlaufenden Bund 36 mündet, welcher als Auflagefläche für das Ventiloberteil 4 dient.

Das im Ausführungsbeispiel eingesetzte Ventiloberteil 4 weist ein Kopfstück 41 auf, das von einer in diesem radial geführten Spindel 42 mittig durchsetzt ist. Über die Spindel 42 ist ein Ventil betätigbar, das auf dem Bund 36 der Innenhülse 3 zur Anlage kommt. Das Ventil ist im Ausführungsbeispiel von einer Steuerscheibe 43 und einer Durchlassscheibe 44 gebildet. Die Steuerscheibe 43 ist mit der Spindel 42 formschlüssig verbunden. An der der Spindel 42 abgewandten Seite der Steuerscheibe 43 ist in dem Kopfstück 41 die Durchlassscheibe 44 vorgesehen, an die sich ein Dichtungselement 45 anschließt, welches auf dem Bund 36 der Innenhülse 3 zur Anlage kommt.

Das Kopfstück 41 besteht aus einem symmetrischen Hohlkörper, dessen beide Stirnflächen offen sind. Auf seiner der Innenhülse 3 zugewandten Seite weist das Kopfstück 41 einen hülsenartigen Teil 410 auf. In dem Teil 410 sind Durchtrittsfenster 411 vorgesehen. Im Anschluss an die Durchtrittsfenster 411 ist das Kopfstück 41 außen mit einem Anschlussgewinde 412 in das Innengewinde 13 der Außenhülse 1 schraubbar. Nach dem Einschrauben liegt das Dichtungselement 5 des Ventiloberteils 4 auf dem Bund 36 der Innenhülse 3 auf. Derartige Ventiloberteile sind dem Fachmann beispielsweise aus der DE 32 07 895 C2 bekannt.

Bei der Montage des Seitenventils wird in die Ausnehmung 15 der Außenhülse 1 ein Dichtungsring 16 eingebracht, so dass er vorgespannt an der Auflage 152 aufliegt. Anschließend wird der Anschlussstutzen 2 im Bereich des Einschraubgewindes 22 bis zum Anschlag 23 mit Kleber versehen und der Anschlussstutzen 2 wird in das Innengewinde 151 der Ausnehmung 15 der Außenhülse 1 eingeschraubt. Dabei wird der Dichtungsring 16 über den Außenkonus 24 des Anschlussstutzens 2 komprimiert, wodurch eine gute Dichtwirkung erzielt wird.

In die Nut 34 der Innenhülse 3 wird ein Dichtungsring 37 unter Vorspannung eingelegt. Das Einschraubgewinde 32 der Innenhülse 3 wird mit einem Kleber bis hin zum Anschlag 33 versehen und die Innenhülse 3 wird mit dem Einschraubgewinde 32 in das Innengewinde 14 der Außenhülse 1 eingeschraubt, bis der Anschlag 33 der Innenhülse 3 am Anschlag 141 der Außenhülse 1 anliegt.

Das Ventiloberteil 4 wird mit dem Anschlussgewinde 412 in das Innengewinde 13 der Außenhülse eingeschraubt, so dass das Dichtungselement 45 auf dem umlaufenden Bund 36 der Innenhülse 3 abdichtend aufliegt. Die Durchtrittsfenster 411 münden dabei in den zwischen Außenhülse 1 und Innenhülse 3 gebildeten Zwischenraum.

Im montierten Zustand des Seitenventils tritt das Medium durch die Innenhülse 3 in das Seitenventil ein. Bei geöffnetem Ventiloberteil 4 tritt das Medium durch die Durchtrittsfenster 411 durch und strömt in entgegengesetzter Richtung durch den zwischen Außenhülse 1 und Innenhülse 3 gebildeten Zwischenraum, bis es im Bereich des verengten Abschnitts 35 der Innenhülse 3 durch den Anschlussstutzen 2 austritt.

## Patentansprüche

1. Seitenventil, umfassend eine Außenhülse (1), in die seitlich ein Anschlussstutzen (2) eingebracht ist, sowie eine Innenhülse (3), die innerhalb eines Befestigungsabschnitts (14, 32) mit der Außenhülse (1) verbunden und in diese eingebracht ist und die ein Anschlussstück zum Anschluss an die Wasserzufuhr aufweist, **dadurch gekennzeichnet, daß** in der Innenhülse (3) benachbart zu dem Befestigungsabschnitt (14, 32) an ihrer dem Anschlussstück (31) abgewandten Seite eine Nut (34) zur Aufnahme eines Dichtungsrings (37) angeordnet ist, wobei zwischen Nut (34) und Befestigungsabschnitt (14, 32) ein Anschlag (33) angeordnet ist und wobei die Außenhülse (1) ebenfalls einen Anschlag (141) aufweist, der im montierten Zustand an dem Anschlag (33) der Innenhülse anliegt und wobei im montierten Zustand zugleich die Nut (34) verschlossen ist.

2. Seitenventil nach Anspruch 1, **dadurch gekennzeichnet, dass** die Innenhülse (3) ein Einschraubgewinde (32) zum Einschrauben in die Außenhülse (1) aufweist und der Befestigungsabschnitt (14, 32) als Schraubverbindung ausgebildet ist.

3. Seitenventil nach Anspruch 1 oder 2, **dadurch gekennzeichnet, dass** die Innenhülse (3) im montierten Zustand die Außenhülse (1) überragt.

4. Seitenventil nach einem der vorgenannten Ansprüche, **dadurch gekennzeichnet, dass** der Anschlussstutzen (2) ein Einschraubgewinde (22) aufweist, mittels dessen er in ein seitlich in ein die Außenhülse (1) eingebrachtes Innengewinde (151) eingeschraubt ist.

5. Seitenventil nach Anspruch 4, **dadurch gekennzeichnet, dass** seitlich in der Außenhülse (1) eine Öffnung zur Aufnahme des Anschlussstutzens (2) angeordnet ist, an deren Grund eine Auflage (152) für einen Dichtungsring (16) angeordnet ist.

6. Seitenventil nach Anspruch 5, **dadurch gekennzeichnet, dass** der Anschlussstutzen (2) an seinem in die Außenhülse (1) einschraubbaren Ende konusförmig ausgebildet ist, sodass im eingeschraubten Zustand zwischen der Auflage (152) und dem konusförmigen Ende (24) eine Aufnahme für einen Dichtungsring (16) gebildet ist.

7. Seitenventil nach einem der vorgenannten Ansprüche, **dadurch gekennzeichnet, dass** an der Außenhülse (1) im Bereich des Anschlussstutzens (2) eine umlaufende Wulst (12) angeordnet ist.

8. Seitenventil nach einem der vorgenannten Ansprüche, **dadurch gekennzeichnet, dass** in die Außenhülse (1) ein Innengewinde (13) zum Einschrauben eines Ventiloberteils (4) eingebracht ist.

## Claims

1. Lateral valve, comprising an outer sleeve (1) into which a connecting nozzle (2) is laterally fitted and an inner sleeve (3) which inside a fixing portion (14, 32) is connected to and fitted into said outer sleeve (1) and which incorporates a connecting member for connection to the water supply, where in said inner sleeve (3) adjacent to said fixing portion (14, 32) on its side facing the connecting member (31) a groove (34) to receive a sealing ring (37) is disposed, where between said groove (34) and said fixing portion (14, 32) a stop (33) is disposed and where said outer sleeve (1) incorporates an L-shaped stop (141) which in the assembled condition lies up against said stop (33) of said inner sleeve and by which at the same time said groove (34) is sealed.

2. Lateral valve in accordance with claim 1, **characterised in that** said inner sleeve (3) incorporates a screw thread (32) for screwing into said outer sleeve (1) and said fixing portion (14, 32) is constructed as a screw connection.

3. Lateral valve in accordance with claim 1 or 2, **characterised in that** said inner sleeve (3) in the assembled condition projects over said connecting nozzle (2).

4. Lateral valve in accordance with any one of the preceding claims, **characterised in that** said connecting nozzle (2) incorporates a screw thread (22) with which said connecting nozzle (2) is screwed into an internal thread (151) which is fitted laterally into said outer sleeve (1).

5. Lateral valve in accordance with claim 4, **characterised in that** a hole for receiving said connecting nozzle (2) is disposed laterally in said outer sleeve (1) and on the bottom of said connecting nozzle (2) a means (152) for supporting a sealing ring (16) is disposed.

6. Lateral valve in accordance with claim 5, **characterised in that** said connecting nozzle (2) at its end which can be screwed into said outer sleeve (1) is constructed conical so that, when screwed in, it forms between said supporting means (152) and said conical end (24) a means for fitting a sealing ring (16).

7. Lateral valve in accordance with any one of the preceding claims, **characterised in that** a raised portion (12) running all the way round the outer sleeve is disposed on said outer sleeve (1) in the area of said connecting nozzle (2).

8. Lateral valve in accordance with any one of the preceding claims, **characterised in that** an internal thread (13) to enable a valve upper part (4) to be screwed into it is provided in said outer sleeve (1).

## Revendications

1. Soupape latérale comprenant une douille extérieure (1) dans laquelle a été introduit latéralement un embout (2) de raccordement, ainsi que comprenant une douille intérieure (3) reliée à l'intérieur d'un segment de fixation (14, 32) avec la douille extérieure (1) et introduite dans celle-ci, et qui présente une pièce servant à raccorder à l'arrivée d'eau, sachant que dans la douille intérieure (3), au voisinage du segment de fixation (14, 32), sur son côté opposé au raccord (31), est agencée une gorge (34) recevant une bague d'étanchéité (37), sachant qu'entre la gorge (34) et le segment de fixation (14, 32) est agencée une butée (33) et que la douille extérieure (1) présente une butée (141) en forme de L qui, à l'état monté, applique contre la butée (33) de la douille intérieure et obture en même temps la gorge (34).

2. Soupape latérale selon la revendication 1, **caractérisée en ce que** la douille intérieure (3) présente un nez fileté (32) à visser dans la douille extérieure (1) et **en ce que** le segment de fixation (14, 32) est configuré sous forme de jonction vissée.

3. Soupape latérale selon la revendication 1 ou 2, **caractérisée en ce que** la douille intérieure (3) dépasse, à l'état monté, de l'embout de raccordement (2).

4. Soupape latérale selon l'une des revendications précédentes, **caractérisée en ce que** l'embout de raccordement (2) présente un nez fileté (22) permettant de le visser dans un taraudage (151) ménagé latéralement dans la douille extérieure (1).

5. Soupape latérale selon la revendication 4, **caractérisée en ce qu'**un orifice recevant l'embout de raccordement (2) est agencé latéralement dans la douille extérieure (1), orifice sur le fond duquel se trouve un appui (152) recevant une bague d'étanchéité (16).

6. Soupape latérale selon la revendication 5, **caractérisée en ce que** l'embout de raccordement (2) est de géométrie conique à son extrémité vissable dans la douille extérieure (1), ce qui a pour effet de former, à l'état vissé, entre l'appui (152) et l'extrémité conique (24), un réceptacle recevant une bague d'étanchéité (16).

7. Soupape latérale selon l'une des revendications précédentes, **caractérisée en ce qu'**un bourrelet périphérique (12) est agencé contre la douille extérieure (1), dans la zone de l'embout (2) de raccordement.

8. Soupape latérale selon l'une des revendications précédentes, **caractérisée en ce qu'**un taraudage (13) a été ménagé dans la douille extérieure (1) pour permettre de visser une pièce supérieure (4) de soupape.
